# EUROPEAN PATENT APPLICATION

(11) **EP 2 141 041 A1**
(43) Date of publication of application: **06.01.2010**
(21) Application number: 07742286.3
(22) Date of filing: 24.04.2007
(51) Int. Cl.: B60K 6/46, B60K 6/26, B60W 10/08, B60W 20/00, H02P 27/06

(54) **ELECTRIC DRIVE SYSTEM AND HYBRID DRIVE SYSTEM**

(71) Applicant: Mitsubishi Electric Corporation, Chiyoda-ku Tokyo 100-8310 (JP)
(72) Inventor: KOBAYASHI, Tomohiro, Tokyo 100-8310 (JP)
(74) Representative: Zech, Stefan Markus
(86) International application number: PCT/JP2007/058851
(87) International publication number: WO 2008/136094

(57) **Abstract**

With an electric drive system in which an engine, a generator, converting devices, and a motor are arranged in series or a series hybrid drive system that a capacitor is used in conjunction with the electric drive system, an object is to ensure a driving force during a failure in the converting devices, to achieve favorable conditions of a fuel consumption of the engine and exhaust gas during use in situations other than the failure, and to reduce the number of line-up of generator and motors when producing movable bodies appropriate to purposed cruising speeds. To achieve the object, each of the drive systems is provided with a function to determine a cruising speed of the movable body, and configured such that a pole quantity of the generator and a pole quantity of the motor each can be changed over. When it is determined that the movable body is driving at a cruising speed, the drive system connects the generator directly to the motor via the bypass unit, changes over the pole quantity of the generator and the pole quantity of the motor in accordance with the cruising speed, and drives the movable body.

## Description

### TECHNICAL FIELD

The present invention relates to an electric drive system in which an engine, a generator, converting devices, and a motor are arranged in series, and a series hybrid drive system that uses a capacitor along with the electric drive system.

### BACKGROUND ART

Conventionally, there has been known a drive system of an electric vehicle that obtains power of a vehicle by driving a motor with electric power from a generator connected to an engine via electric-power converting devices, such as a converter and an inverter. An example of such drive system of an electric vehicle is a configuration of a series model in which a flow of energy from the generator to the motor is in series, and furthermore there has been known a drive system of a series hybrid electric vehicle that is provided with a capacitor in between the generator and the motor.

For example, Patent Document 1 mainly discloses a system configuration for a faulty situation of a failure in the converter or the inverter in the drive system of a series hybrid electric vehicle. According to Patent Document 1, the pole quantity of an alternating-current generator is configured to be fewer than the pole quantity of an alternating-current motor, and upon a failure in the converter or the inverter, the drive system disconnects the converter and the inverter from the alternating-current generator and the alternating-current motor, and connects the alternating-current generator directly to the alternating-current motor, so that the alternating-current motor is directly driven with alternating-current power supplied from the alternating-current generator. Thus, an object of Patent Document 1 is to improve operational reliability by providing a circuit to bypass the converter and the inverter arranged in between the alternating-current generator and the alternating-current motor, and ensuring a driving force even during a failure in the electric-power converting devices.

Patent Document 1: Japanese Patent Application Laid-open No. H11-341607

### DISCLOSURE OF INVENTION

### PROBLEM TO BE SOLVED BY THE INVENTION

However, the conventional drive system of an electric vehicle, which includes a circuit that can connect the alternating-current generator directly to the alternating-current motor by bypassing the electric-power converting devices, has a problem that because an object of the drive system is to improve operational reliability in a faulty situation, if the drive system is applied to a movable body to be used for various purposes including situations other than a faulty situation, a wide range of the number of revolutions is required for operation of the engine, so that a fuel consumption of the engine and exhaust gas are worsened, and system efficiency cannot be improved. For this reason, the configuration using the bypass circuit is limited to use in a faulty situation.

Moreover, when producing vehicles in accordance with cruising speeds of the movable body to be used for various purposes so as to use the conventional drive system of an electric vehicle also during a cruise driving in situations other than a faulty situation, there is a problem that a plurality of types needs to be provided in a line-up of generators and motors.

The present invention has been made to solve the above problems, and an object of the present invention is to obtain an electric drive system and a hybrid drive system such that a driving force can be ensured during a failure in electric-power converting devices, favorable conditions of a fuel consumption of an engine and exhaust gas can be achieved during use in situations other than a failure, and the number of line-up of generator and motors can be reduced when producing movable bodies appropriate to purposed cruising speeds.

### MEANS FOR SOLVING PROBLEM

To solve the above problems and to achieve the object, an electric drive system according to the present invention is for driving a movable body, including an engine; an alternating-current generator that is connected to the engine and that generates alternating-current power; an AC/DC converter that converts the alternating-current power supplied from the alternating-current generator into direct-current power; a DC/AC converter that converts the direct-current power output from the AC/DC converter into alternating-current power; an alternating-current motor that is driven by the alternating-current power output from the DC/AC converter; a bypass unit that connects the alternating-current generator directly to the alternating-current motor by bypassing the AC/DC converter and the DC/AC converter; a bypass switching unit that switches a route from the alternating-current generator to the alternating-current motor to either one of a route through the bypass unit and a route through the AC/DC converter and the DC/AC converter; a generator pole-quantity changeover unit that changes over number of poles of the alternating-current generator; a motor pole-quantity changeover unit that changes over number of poles of the alternating-current motor; a cruising-speed determining unit that determines whether the movable body is running at a predetermined cruising speed; and a control unit that connects, when the cruising-speed determining unit determines that the movable body reaches the cruising speed, the alternating-current generator to the alternating-current motor through the bypass unit by switching the bypass switching unit, changes over at least one of the number of poles of the alternating-current generator and the number of poles of the alternating-current motor, and sets a frequency of the alternating-current generator and a frequency of the alternating-current motor to values corresponding to the cruising speed.

### EFFECT OF THE INVENTION

According to the present invention, when the cruising-speed determining unit determines that the movable body have reached a cruising speed, the drive system is configured to connect the alternating-current generator directly to the alternating-current motor via the bypass unit, to change over the pole quantity of the alternating-current generator and the pole quantity of the alternating-current motor, and to drive the movable body by setting the frequency of the alternating-current generator and the frequency of the alternating-current motor in accordance with the cruising speed, thereby improving a fuel consumption and exhaust gas even during a cruise driving.

Moreover, because the drive system is configured to drive the movable body during a cruise driving by setting the frequency of the alternating-current generator and the frequency of the alternating-current motor in accordance with a cruising speed determined based on a purpose of the movable body, the number of line-up of generators and motors can be reduced at the manufacturing stage, so that production can be simplified.

### BRIEF DESCRIPTION OF DRAWINGS

[Fig. 1] Fig. 1 is a block diagram that depicts a configuration of an electric drive system according to a first embodiment of the present invention.
[Fig. 2] Fig. 2 is a schematic diagram that presents general engine characteristics, a setting value of the number of revolutions in an acceleration-deceleration mode, and a setting range of the number of revolutions in a cruising mode.

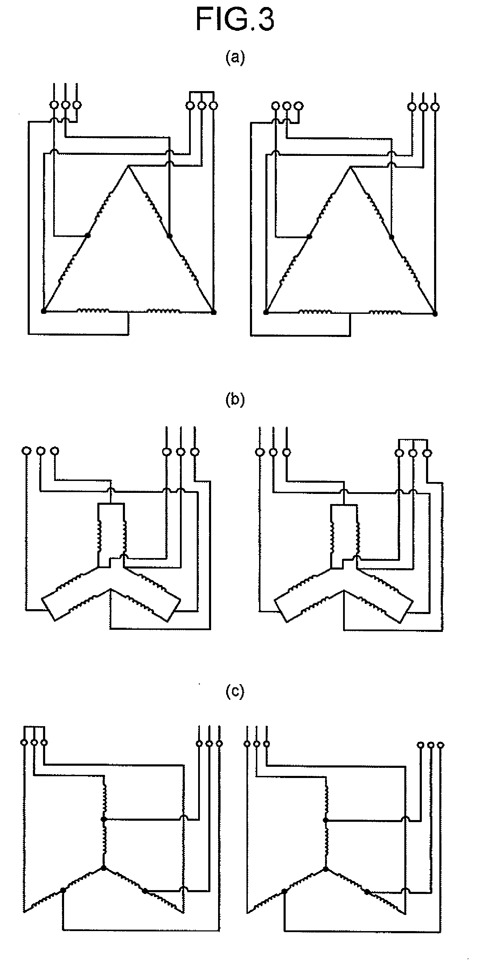

[Fig. 3] Fig. 3 includes section (a), which are schematic diagrams that depict an example of the structures of windings of a generator and a motor of which pole quantities can changed over, and an example of a changeover of the pole quantities, section (b), which are schematic diagrams that depict another example of the structures of windings of a generator and a motor of which pole quantities can changed over, and an example of a changeover of the pole quantities, and section (c), which are schematic diagrams that depict still another example of the structures of windings of a generator and a motor of which pole quantities can changed over, and an example of a changeover of the pole quantities.
[Fig. 4] Fig. 4 is a block diagram that depicts a configuration of an electric drive system according to a second embodiment of the present invention.
[Fig. 5] Fig. 5 is a schematic diagram that depicts a configuration of a cruising-speed determining unit according to a third embodiment.
[Fig. 6] Fig. 6 is a block diagram that depicts a configuration of an electric drive system according to a fourth embodiment of the present invention.
[Fig. 7] Fig. 7 is a block diagram that depicts a configuration of an electric drive system according to a fifth embodiment of the present invention.
[Fig. 8] Fig. 8 is a block diagram that depicts a configuration of an electric drive system according to a sixth embodiment of the present invention.
[Fig. 9] Fig. 9 is a block diagram that depicts a configuration of an electric drive system according to a seventh embodiment of the present invention.

### EXPLANATIONS OF LETTERS OR NUMERALS

- 1: Engine
- 2: Generator
- 3: AC/DC converter
- 4: Capacitor
- 5: DC/AC converter
- 6: Induction motor
- 7: Gear
- 8: Drive shaft
- 9: Differential gear
- 10: Wheel
- 11, 23: Cab
- 12: Main controller (cruising-speed determining unit)
- 13: Engine control module
- 14, 15: Converter control circuit
- 16: Generator bypass switch
- 17: Motor bypass switch
- 18: Bypass unit
- 19, 20: Generator pole-quantity changeover switch
- 21, 22: Motor pole-quantity changeover switch
- 24: ETC
- 25: Navigation system
- 26: Traffic control system
- 27: Generator pole-quantity changeover signal
- 28: Generator pole-quantity changeover signal

### BEST MODE(S) FOR CARRYING OUT THE INVENTION

Exemplary embodiments of an electric drive system according to the present invention will be explained below in detail with reference to the accompanying drawings. The present invention is not limited to the embodiments.

### First embodiment

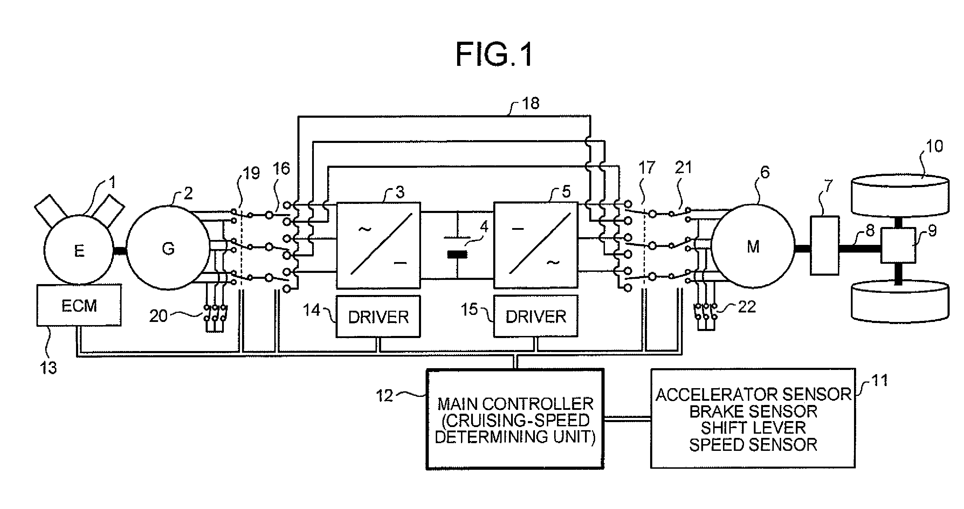

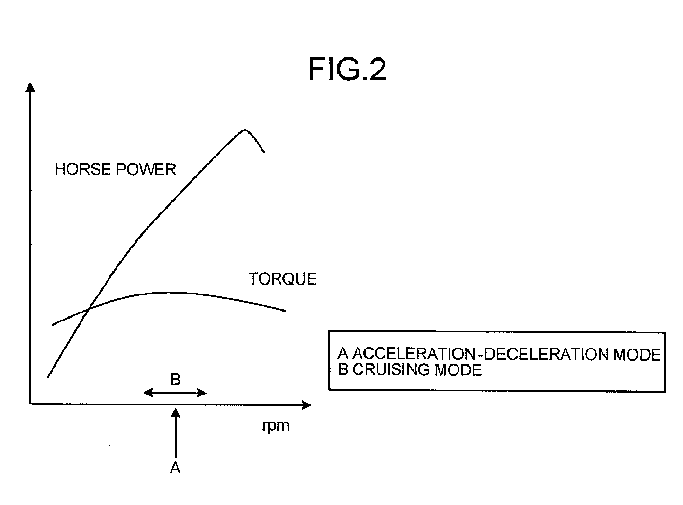

Fig. 1 is a block diagram that depicts a configuration of an electric drive system according to a first embodiment of the present invention. Fig. 2 is a schematic diagram that presents general engine characteristics, a setting value of the number of revolutions in an acceleration-deceleration mode, and a setting range of the number of revolutions in a cruising mode. Each of sections (a) to (c) on Fig. 3 are schematic diagrams that depict an example of the structures of windings of a generator and a motor of which pole quantities can changed over, and an example of a changeover of the pole quantities.

As shown in Fig. 1, the electric drive system according to the embodiment is equipment for driving a movable body, and includes an engine 1, a generator 2, an AC/DC converter 3, a capacitor 4, a DC/AC converter 5, and an induction motor 6. The generator 2 is connected to the engine 1 and generates alternating-current power. The AC/DC converter 3 converts the alternating-current power generated by the generator 2 into direct-current power. The capacitor 4 stores therein the direct-current power output from the AC/DC converter 3. The DC/AC converter 5 converts the direct-current power supplied from the AC/DC converter 3 and the capacitor 4 into alternating-current power, and outputs the alternating-current power. The induction motor 6 is driven with the alternating-current power supplied from the DC/AC converter 5. In this way, according to the embodiment, the engine 1, the generator 2, the AC/DC converter 3, the DC/AC converter 5, and the induction motor 6 are connected in series and form a series system, and the system has a hybrid configuration in which the capacitor 4 is provided in between the AC/DC converter 3 and the DC/AC converter 5. Although a series hybrid model is explained as an example in the embodiment, the present invention can be similarly applied to a configuration that does not include the capacitor 4. Moreover, for example, the induction motor 6 is used in the embodiment, however, the present invention is not limited to this, and other types of motor can be used.

The embodiment describes the electric drive system that further includes a gear 7 for changing over the number of revolutions and torque of the induction motor 6, a drive shaft 8, a differential gear 9, and wheels 10 provided at the both ends of an axle connected to the differential gear 9, and is configured to be used in, for example, an automobile, a bus, and a truck.

The electric drive system according to the embodiment further includes generator pole-quantity changeover switches 19, 20 that can change over the pole quantity of the generator 2, and motor pole-quantity changeover switches 21, 22 that can change over the pole quantity of the induction motor 6. The generator 2 works as a generator of which pole quantity can be changed over, and the induction motor 6 works as a motor of which pole quantity can be changed over. The generator pole-quantity changeover switches 19 include three switches correspondingly to three phases U, V, and W, and the generator pole-quantity changeover switches 20 include three circuit breakers correspondingly to the three phases U, V, and W. The motor pole-quantity changeover switches 21 include three switches correspondingly to the three phases U, V, and W, and the motor pole-quantity changeover switches 22 include three circuit breakers correspondingly to the three phases U, V, and W. Section (a) of Fig. 3 are schematic diagrams that depict an example of the structures of windings in the generator 2 or the induction motor 6 of which pole quantity can changed over, and an example of a changeover of the pole quantity, and present a structure at a low speed shown on the left side in comparison with a structure at a high speed shown on the right side. As shown in section (a) of Fig. 3, the structure at the low speed differs from the structure at the high speed, and the pole quantity is set large at the low speed, while the pole quantity is set small at the high speed, by switching two kinds of the pole-quantity changeover switches. Each of sections (b) and (c) of Fig. 3 are schematic diagrams that depict another example of the structures of windings in the generator 2 or the induction motor 6 of which pole quantity can changed over, and a changeover of the pole quantity, and presents a structure at a low speed on the left side and a structure at a high speed on the right side, similarly to section (a).

The electric drive system according to the embodiment further includes a bypass unit 18, generator bypass switches 16, and motor bypass switches 17. The bypass unit 18 is configured, for example, as connecting lines, to connect the generator 2 directly to the induction motor 6 by bypassing the AC/DC converter 3, the capacitor 4, and the DC/AC converter 5. The generator bypass switches 16 and the motor bypass switches 17 are two kinds of changing switches that can switch a flow route of electric power from the generator 2 to the induction motor 6, into the bypass unit 18, or into a circuit that includes the AC/DC converter 3, the capacitor 4, and the DC/AC converter 5. The generator bypass switches 16 are changing switches provided in between the generator 2 and the AC/DC converter 3, and the motor bypass switches 17 are changing switches provided in between the DC/AC converter 5 and the induction motor 6. The generator pole-quantity changeover switches 19 are provided in between the generator 2 and the generator bypass switches 16, and the motor pole-quantity changeover switches 21 are provided in between the motor bypass switches 17 and the induction motor 6.

The electric drive system according to the embodiment further includes an engine control module (ECM) 13, a converter control circuit 14, a converter control circuit 15, a main controller 12, and a cab 11. The engine control module 13 controls the engine 1. The converter control circuit 14 is a driver that controls the AC/DC converter 3. The converter control circuit 15 is a driver that controls the DC/AC converter 5. The main controller 12 controls a system including the engine control module 13 and the converter control circuits 14 and 15. The cab 11 is connected to the main controller 12, includes various sensors, and can control the entire system.

The main controller 12 includes a function of a cruising-speed determining unit, which determines whether the movable body is driving at a cruising speed. The cruising speed is a speed that is substantially constant, frequently employed for long hours as a state of the movable body, and predetermined in accordance with each movable body based on specifications required by a customer and other requirements. For example, if the movable body is a bus that is operated mainly on a highway, the cruising speed is a typical speed during operation on a highway. Each of the generator bypass switches 16 and the motor bypass switches 17 is connected to the main controller 12, switching of each of them is controlled by the main controller 12. Although the main controller 12 includes the function of the cruising-speed determining unit according to the embodiment, the cruising-speed determining unit can be an individual unit.

The cab 11 is provided with various sensors, such as an accelerator sensor, a brake sensor, a shift lever, and a speed sensor, and control devices. A control instruction from the cab and information acquired by the sensors are input into the main controller 12.

Operations according to the embodiment are explained below with reference to Figs. 1 and 2. First of all, operation during acceleration-deceleration of the movable body is explained below. When the movable body is at a standstill, the generator bypass switches 16 are set to connect the generator 2 to the AC/DC converter 3, and the motor bypass switches 17 are set to connect the DC/AC converter 5 to the induction motor 6. When accelerating from a standstill based on an instruction from the cab 11, the engine 1 is driven via the main controller 12 and the engine control module 13, and alternating-current power is generated by driving the generator 2 with the engine 1. The alternating-current power generated by the generator 2 is input into the AC/DC converter 3 via the generator pole-quantity changeover switches 19 and the generator bypass switches 16, converted into direct-current power, and then output. The direct-current power output from the AC/DC converter 3 can be used for charging the capacitor 4, and the direct-current power output from the AC/DC converter 3 or the direct-current power discharged from the capacitor 4 is input into the DC/AC converter 5, converted into alternating-current power, and then output. The alternating-current power output from the DC/AC converter 5 is input into the induction motor 6 via the motor bypass switches 17 and the motor pole-quantity changeover switches 21. The induction motor 6 is driven with the supplied alternating-current power, and the wheels 10 are rotated with generated torque via the gear 7, the drive shaft 8, and the differential gear 9. General engine characteristics of the engine 1 are shown in Fig. 2, and curves of horse power and torque are drawn with respect to the horizontal line representing the number of revolutions (rpm: revolutions per minute). During acceleration-deceleration of the movable body, the engine 1 employs a constant number of revolutions according to the characteristics shown in Fig. 2 at which a fuel consumption and exhaust gas are in a favorable condition, and is driven not to make loss due to change in the number of revolutions. In other words, keeping the number of revolutions of the engine 1 at constant is advantageous for the fuel consumption and exhaust gas, the movable body is driven by setting the number of revolution to a constant value as indicated as an acceleration-deceleration mode A shown in Fig. 2. In the acceleration-deceleration mode A, each of the AC/DC converter 3 and the DC/AC converter 5 has an efficiency of approximately 95%, and a total efficiency of the converter system is approximately 90%.

Operation of the movable body during a cruise driving is explained below. When the cruising-speed determining unit in the main controller 12 determines that the movable body is driving at the cruising speed, the generator bypass switches 16 and the motor bypass switches 17 are switched to connect the generator 2 to the induction motor 6 via the bypass unit 18. Furthermore, in accordance with the cruising speed, the generator pole-quantity changeover switches 19, 20 and the motor pole-quantity changeover switches 21, 22 are switched, windings, the gear 7, the differential gear 9 are set, the number of revolutions of the engine 1 is set to be appropriate to the cruising speed, and a generator frequency is made substantially equal to a motor frequency. In other words, the engine 1 shifts from the acceleration-deceleration mode A to a cruising mode B shown in Fig. 2, so that the number of revolutions of the engine is controlled in accordance with a speed of the movable body. A range of the number of revolutions corresponding to the cruising mode A indicates that the cruising speed of the movable body varies in a certain range depending on a driving situation. In this way, during the cruise driving, the generator 2 is directly connected to the induction motor 6 via the bypass unit 18, electric conversion with the converting devices is not performed, and the number of revolutions is set to be appropriate to a cruising speed suitable for a purpose of the movable body by changing the pole quantity.

Similarly to the conventional technology, also when any of the converting devices fails, a driving force can be obtained by using the configuration that the generator 2 is directly connected to the induction motor 6 via the bypass unit 18.

According to the embodiment, the electric drive system is configured such that the generator pole quantity and the motor pole quantity can be changed over by the generator pole-quantity changeover switches 19, 20 and the motor pole-quantity changeover switches 21, 22, and is added with a function of determining a cruising speed of the movable body with the cruising-speed determining unit, accordingly, while driving the movable body at the cruising speed, the generator 2 is directly connected to the induction motor 6 via the bypass unit 18, and the movable body is driven by controlling the number of revolutions of the engine to be appropriate to the cruising speed. Consequently, losses made in the AC/DC converter 3 and the DC/AC converter 5 can be eliminated, a fuel consumption and exhaust gas can be improved, so that efficient driving can be achieved. Such configuration can improve the fuel consumption and exhaust gas during a cruising speed, in terms of which a series hybrid model has been considered as less efficient than a parallel hybrid model.

According to the conventional drive system of an electric vehicle (for example, see Patent Document 1) that drives the vehicle by connecting the alternating-current generator directly to the alternating-current motor via the bypass unit during a failure in the converting devices, when producing vehicles in accordance with cruising speeds of a movable body to be used for various purposes so as to employ the conventional configuration also in situations other than a failure in the converting devices, a plurality of types needs to be provided in the line-up of generators and motors. According to the embodiment, it only needs to change over an input frequency of the alternating-current motor and a generation frequency of the alternating-current generator in accordance with a cruising speed determined based on a purpose of each movable body, the number of line-up of the generators and the motors can be reduced, and production can be simplified.

Although the embodiment is explained above in the example of an electric vehicle, the present invention is not limited to this, but also can be applied to other movable bodies. For example, suppose a configuration in which the induction motor 6 or the drive shaft 8 is connected to a screw, the present invention can be applied to a ship. In such case, the electric drive system can cope with an emergency by using a bypassed direct connection during a failure on the sea.

### Second embodiment

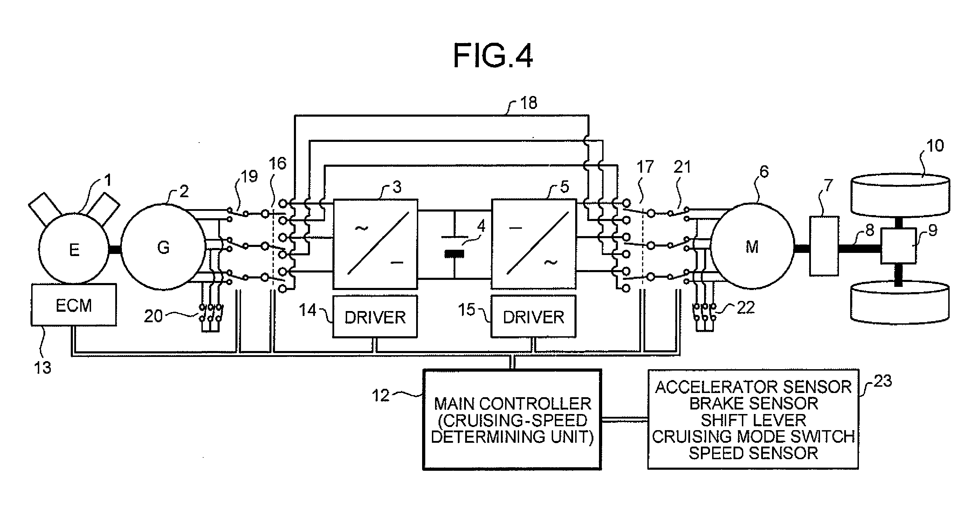

Fig. 4 is a block diagram that depicts a configuration of an electric drive system according to a second embodiment of the present invention. As shown in Fig. 4, according to the embodiment, the cab 11 of the electric drive system of the first embodiment is replaced with a cab 23, and a shift lever or a cruising mode switch provided on the cab 23 is configured such that a driver of the movable body can manually give an instruction of the cruising mode. According to the embodiment, when the cruising mode is specified by the driver of the movable body via the shift lever or the cruising mode switch, the movable body is driven in the cruising mode explained in the first embodiment. In other words, according to the embodiment, determination of the cruising speed to be made by the cruising-speed determining unit is performed with a manual instruction via the shift lever or the cruising mode switch. The other configurations in the embodiment are similar to those in the first embodiment, therefore, the same components in Fig. 4 are assigned with the same reference numerals, and detailed explanations of them are omitted.

Thus, according to the embodiment, because a function of manually specifying the cruising mode is provided, even during a movement under a situation that an automatic determination of the cruising mode is difficult, efficient driving in the cruising mode can be carried out with an intention of the driver.

### Third embodiment

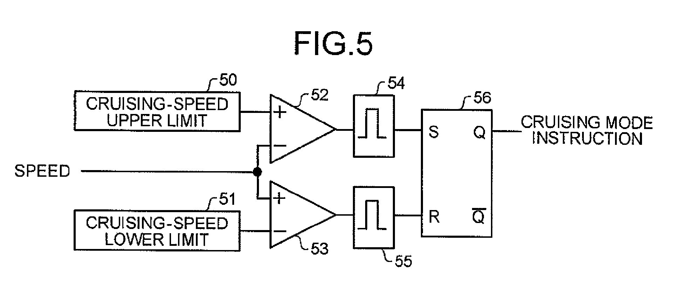

According to the embodiment, the electric drive system uses a speed sensor signal detected by the speed sensor, which is provided on the cab as the cruising-speed determining unit in the configuration of the first embodiment. Fig. 5 is a schematic diagram that depicts a configuration of the cruising-speed determining unit that is responding to a speed-sensor signal within the main controller 12 according to the embodiment. As shown in Fig. 5, a speed sensor signal denoted as "speed" is compared with a cruising-speed upper limit 50 and a cruising-speed lower limit 51. The cruising-speed upper limit 50 is a signal corresponding to a predetermined upper limit of the cruising speed, and similarly the cruising-speed lower limit 51 is a predetermined lower limit of the cruising speed. If it is determined that the detected speed falls between the cruising-speed upper limit and the cruising-speed lower limit, a cruising mode instruction is output. According to Fig. 5, the cruising-speed upper limit 50 and the speed sensor signal are input into an operational amplifier 52, while the speed sensor signal and the cruising-speed lower limit 51 are input into an operational amplifier 53. Outputs from the operational amplifiers 52 and 53 are input into an SR (set-reset) type flip-flop 56 via AD converters 54 and 55, respectively. If the detected speed falls between the cruising-speed upper limit and the cruising-speed lower limit, the cruising mode instruction is output.

According to the embodiment, the cruising mode is automatically determined in accordance with a detected speed by the speed sensor, so that the driver does not need to give an instruction of the cruising mode.

### Fourth embodiment

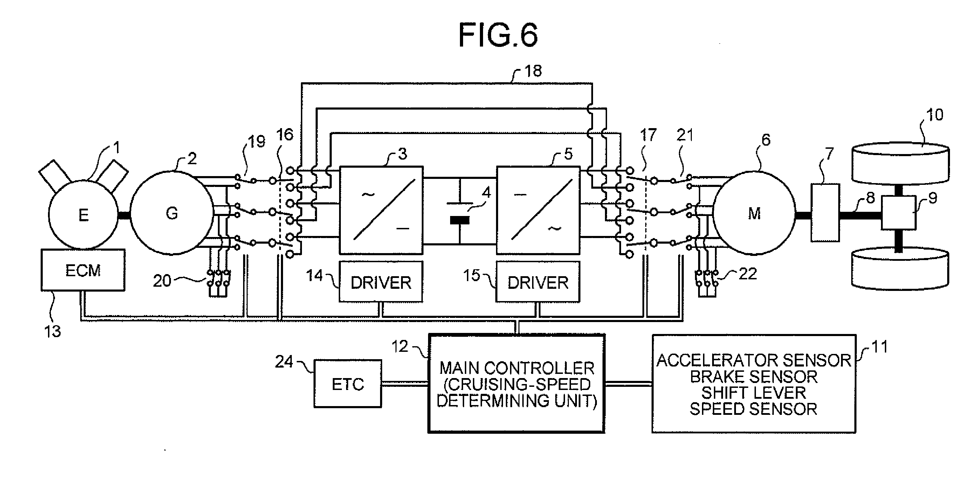

Fig. 6 is a block diagram that depicts a configuration of an electric drive system according to a fourth embodiment of the present invention. As shown in Fig. 6, according to the embodiment, an ETC (Electronic Toll Collection) on-vehicle device 24 is added to the configuration of the electric drive system of the first embodiment. The cruising speed is determined by using an electronic toll collection on a highway or a motorway. In other words, in a case where the movable body is a vehicle, and drives on a highway or a motorway, the cruising mode is determined with a signal detected when the vehicle passes through a gate, and the movable body is driven in the cruising mode explained in the first embodiment. Cruising-mode determination information is acquired by the main controller 12, for example, through communication between the ETC on-vehicle device 24 and a system placed on the road. The speed of the movable body can be obtained, for example, from time difference information when the movable body sequentially passes through two gates. If a speed sensor is provided in a system placed on the road, speed information detected by the speed sensor can be used. The other configurations in the embodiment are similar to those in the first embodiment, therefore, the same components in Fig. 6 are assigned with the same reference numerals, and detailed explanations of them are omitted.

Thus, according to the embodiment, the cruising mode is determined by using the ETC 24, accordingly, a determination of the cruising mode can be reliably performed on a long-distance truck or a long-distance coach that frequently uses a highway or a motorway.

### Fifth embodiment

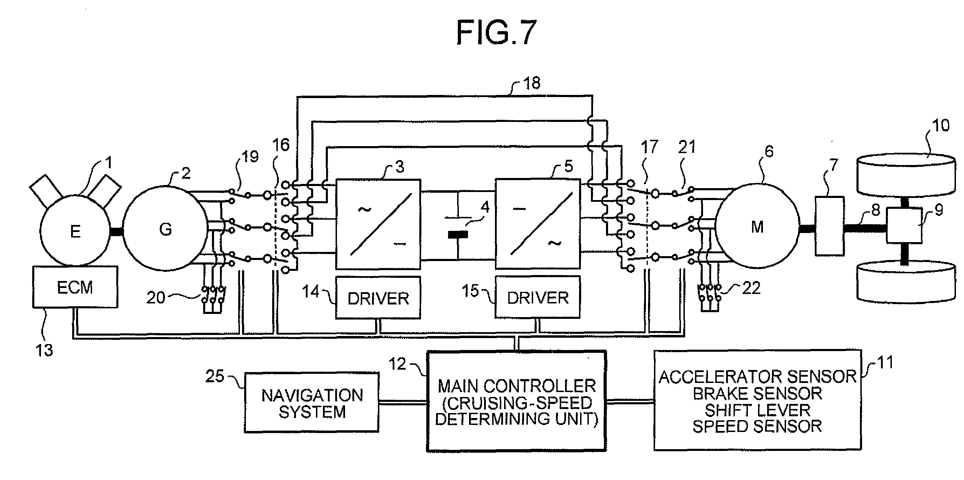

Fig. 7 is a block diagram that depicts a configuration of an electric drive system according to a fifth embodiment of the present invention. As shown in Fig. 7, according to the embodiment, a navigation system 25 is added to the configuration of the electric drive system of the first embodiment. In a case where the movable body is, for example, an automobile, the cruising mode is determined based on driving information acquired from the navigation system 25, for example, information that the movable body is driving on a highway, a motorway, or a road with no traffic light over a certain distance. In another case where the movable body is, for example a ship, the cruising mode is determined based on information, such as a distance from the land, and other shipping-lane information. Consequently, the movable body is driven in the cruising mode explained in the first embodiment. The other configurations are similar to those in the first embodiment, therefore, the same components in Fig. 7 are assigned with the same reference numerals, and detailed explanations of them are omitted.

Thus, according to the embodiment, the cruising mode is determined based on output from the navigation system 25, so that efficient driving in the cruising mode can be carried out on a road with few traffic lights as well as on a highway and a motorway in the case that the movable body is an automobile, and efficient driving in the cruising mode can be carried out also in the case that the movable body is a ship.

### Sixth embodiment

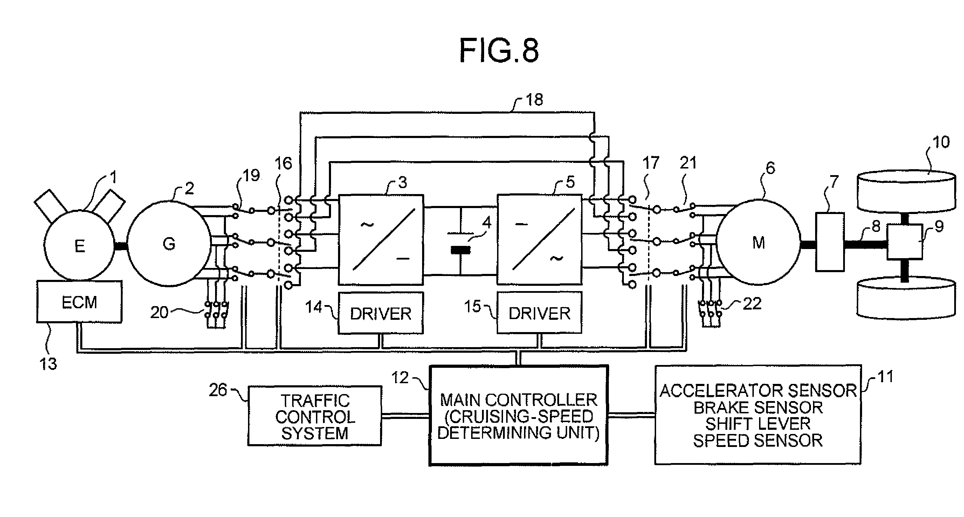

Fig. 8 is a block diagram that depicts a configuration of an electric drive system according to a sixth embodiment of the present invention. As shown in Fig. 8, according to the embodiment, a traffic control system 26 is added to the configuration of the electric drive system of the first embodiment. When the movable body is, for example, a bus on a regular route or a train on a railroad, the cruising mode is determined based on sectional information from the traffic control system 26 about a section in which the movable body continuously runs at a constant speed, so that the movable body is driven in the cruising mode explained in the first embodiment. The other configurations are similar to those in the first embodiment, therefore, the same components in Fig. 8 are assigned with the same reference numerals, and detailed explanations of them are omitted.

Thus, according to the embodiment, the cruising mode is determined based on output from the traffic control system 26, efficient driving in the cruising mode can be carried out in a bus route or a railroad provided with a traffic control system.

### Seventh embodiment

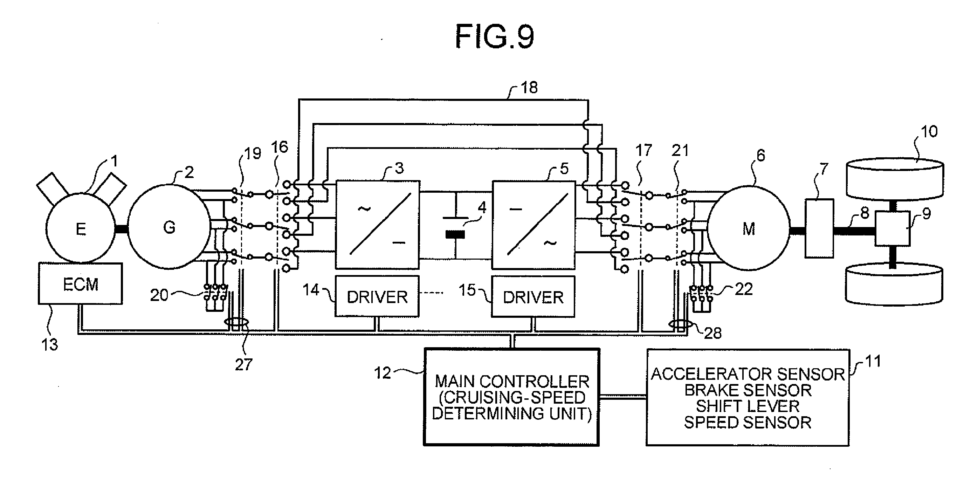

Fig. 9 is a block diagram that depicts a configuration of an electric drive system according to a seventh embodiment of the present invention. According to the embodiment, a plurality of cruising speeds can be set. As shown in Fig. 9, the generator pole-quantity changeover switches 19, 20 and the motor pole-quantity changeover switches 21, 22 are configured as contactors that enable the main controller 12 to switch the cruising speeds while driving, and the cruising speeds are switched with a generator pole-quantity changeover signal 27 and a generator pole-quantity changeover signal 28. In this way, the electric drive system is configured to perform a changeover of the pole quantities of the generator 2 and the induction motor 6 based on an instruction from the main controller (the cruising-speed determining unit) 12, for example, by operating an remote control switch while driving. The other configurations are similar to those in the first embodiment, therefore, the same components in Fig. 9 are assigned with the same reference numerals, and detailed explanations of them are omitted.

When the movable body is a movable body that needs a plurality of patterns of driving at a constant speed, for example, a bus on a long-distance regular route that drives in an urban area and on a highway, the cruising-speed determining unit performs determination on a plurality of cruising speeds, for example, a cruising speed of driving in an urban area at 35 km/h, and a cruising speed of driving on a highway at 70 km/h. The electric drive system deals with a plurality of cruising modes by changing over the pole quantities of the generator 2 and the induction motor 6 in accordance with the determined speed, and substantially matching the generator frequency with the motor frequency.

According to the embodiment, when the movable body has a plurality of constant-speed driving patterns, the system configuration of the movable body can be switched into a system configuration appropriate to a cruising speed while driving, so that efficient driving in a cruising mode can be achieved at various speeds.

### INDUSTRIAL APPLICABILITY

As described above, the electric drive apparatus according to the present invention can be applied to an electric drive model or a series hybrid drive model of a bus, a track, a ship, and the like.

## Claims

1. An electric drive system for driving a movable body, comprising:
an engine;
an alternating-current generator that is connected to the engine and that generates alternating-current power;
an AC/DC converter that converts the alternating-current power supplied from the alternating-current generator into direct-current power;
a DC/AC converter that converts the direct-current power output from the AC/DC converter into alternating-current power;
an alternating-current motor that is driven by the alternating-current power output from the DC/AC converter;
a bypass unit that connects the alternating-current generator directly to the alternating-current motor by bypassing the AC/DC converter and the DC/AC converter;
a bypass switching unit that switches a route from the alternating-current generator to the alternating-current motor to either one of a route through the bypass unit and a route through the AC/DC converter and the DC/AC converter;
a generator pole-quantity changeover unit that changes over number of poles of the alternating-current generator;
a motor pole-quantity changeover unit that changes over number of poles of the alternating-current motor;
a cruising-speed determining unit that determines whether the movable body is running at a predetermined cruising speed; and
a control unit that connects, when the cruising-speed determining unit determines that the movable body reaches the cruising speed, the alternating-current generator to the alternating-current motor through the bypass unit by switching the bypass switching unit, changes over at least one of the number of poles of the alternating-current generator and the number of poles of the alternating-current motor, and sets a frequency of the alternating-current generator and a frequency of the alternating-current motor to values corresponding to the cruising speed.

2. The electric drive system according to claim 1, wherein the cruising-speed determining unit determines the cruising speed based on a manual instruction from a driver of the movable body through either one of a shift lever and a switch provided in the movable body.

3. The electric drive system according to claim 1, wherein the cruising-speed determining unit determines the cruising speed based on a speed detected by a speed sensor provided in the movable body.

4. The electric drive system according to claim 1, wherein the cruising-speed determining unit determines the cruising speed by using an electric toll collection system.

5. The electric drive system according to claim 1, wherein the cruising-speed determining unit determines the cruising speed by using a navigation system.

6. The electric drive system according to claim 1, wherein the cruising-speed determining unit determines the cruising speed by using a traffic control system.

7. The electric drive system according to one of claims 1 to 6, wherein the cruising-speed determining unit determines a plurality of different cruising speeds, and in accordance with a determined cruising speed, outputs a generator pole-quantity changeover instruction signal for changing over the number of poles of the alternating-current generator to the generator pole-quantity changeover unit and a motor pole-quantity changeover instruction signal for changing over the number of poles of the alternating-current motor to the motor pole-quantity changeover unit.

8. A hybrid drive system comprising:
the electric drive system according to one of claims 1 to 7; and
a capacitor.
